# EUROPÄISCHE PATENTSCHRIFT

(11) **EP 3 517 341 B1**
(45) Veröffentlichungstag und Bekanntmachung des Hinweises auf die Patenterteilung: **08.12.2021**
(21) Anmeldenummer: 18020514.8
(22) Anmeldetag: 18.10.2018
(51) Int. Cl.: B60L 3/00, B60L 53/66

(54) **TRAKTIONSBATTERIE-LADEANORDNUNG**
TRACTION BATTERY CHARGING ARRANGEMENT
DISPOSITIF DE CHARGE DE BATTERIE DE TRACTION

(30) Priorität: 24.01.2018 DE 102018101510
(43) Veröffentlichungstag der Anmeldung: 31.07.2019
(73) Patentinhaber: Dr.Ing. H.C. F. Porsche Aktiengesellschaft, 70435 Stuttgart (DE)
(72) Erfinder: Heyne, Raoul, 38640 Goslar (DE); Hähre, Karsten, 67373 Dudenhofen (DE); Wischnak, Thomas, 76185 Karlsruhe (DE); Zander, Steve, 71672 Marbach (DE); Brömauer, Jakob, 76327 Pfinztal (DE)

(56) Entgegenhaltungen:
- DE-A1-102012 204 862
- DE-A1-102015 116 105
- US-A1- 2004 017 643
- US-A1- 2016 303 986

## Beschreibung

Die Erfindung bezieht sich auf eine Traktionsbatterie-Ladeanordnung zum Aufladen einer Traktionsbatterie eines Kraftfahrzeugs.

Eine Ladeanordnung zum Aufladen einer Traktionsbatterie eines Kraftfahrzeugs besteht aus mehreren Komponenten, insbesondere aus der eigentlichen Ladestation, die einen Ladestecker zur Herstellung einer elektrischen Ladeverbindung mit der Traktionsbatterie des Kraftfahrzeugs aufweist, und der elektrischen Aufbereitung, der aus dem Stromnetz zur Verfügung gestellten Mittelspannung, um hieraus die erforderliche Ladespannung zu generieren. In sogenannten Ladeparks werden von einer Aufbereitungseinheit gegebenenfalls eine Vielzahl von Ladestationen elektrisch versorgt. Die Kommunikation zwischen den Komponenten einer Ladeanordnung bzw. eines Ladeparks erfolgt über digitale Kommunikationsleitungen, die jedoch grundsätzlich nicht unempfindlich sind im Bezug auf Störungen, Verzögerungen etc., insbesondere dann, wenn die Ladeanordnungs-Komponenten räumlich weiter auseinanderliegen. Wegen der hohen elektrischen Ströme, die in einer Ladeanordnung in den Ladeleitungen fließen, besteht generell ein relativ hohes Risiko von Überhitzung bzw. Feuer. Es ist daher sicherzustellen, dass bei einer Störung an irgendeiner Komponente der gesamten Ladeanordnung eine sofortige Abschaltung aller Komponenten der Ladeanordnung erfolgt.

Aus DE 10 2015 116 105 A1 und US 2016/0303986 A1 sind jeweils Ladeanordnungen zum Aufladen einer Traktionsbatterie eines Kraftfahrzeuges bekannt, die eine elektrische Sicherheitsschleife aufweisen.

Aufgabe der Erfindung ist es, eine mehrteilige Traktionsbatterie-Ladeanordnung mit einer zuverlässigen Sofortabschaltung zur Verfügung zu stellen.

Diese Aufgabe wird erfindungsgemäß gelöst durch eine Traktionsbatterie-Ladeanordnung mit den Merkmalen des Anspruchs 1.

Die erfindungsgemäße Traktionsbatterie-Ladeanordnung weist eine Ladestation auf, die einen Ladestecker/ -buchse zur Herstellung einer elektrischen Ladeverbindung mit der Traktionsbatterie des Kraftfahrzeugs aufweist. Das Kraftfahrzeug weist einen zu dem Ladestations-Ladestecker korrespondierenden komplementären Ladestecker auf, der zum Aufladen der Kraftfahrzeug-Traktionsbatterie mit dem Ladestations-Ladestecker zusammengesteckt wird, so dass auf diese Weise eine elektrische Ladeverbindung hergestellt wird.

Die Ladeanordnung weist eine elektrische Aufbereitung und Versorgung auf, die die Ladestation mit dem Ladestrom versorgt, und weist ein Ladestrom-Steuerungsmittel auf, das den Ladestrom bei Bedarf abschaltet.

Die Ladeanordnung weist ferner eine elektrische Sicherheitsschleife auf, die eine Schleifenstrom-Quelle, mindestens einen ansteuerbaren Schleifenöffner und mindestens einen Schleifenstrom-Sensor aufweist. Die Sicherheitsschleife weist also einen geschlossenen Stromkreis mit einer Schleifenstrom-Quelle auf. Die Schleifenstrom-Quelle liefert einen Schleifenstrom mit einem definierten zeitlichen Schleifenstrom-Verlauf in der Schleifenleitung, beispielsweise einen konstanten oder nicht-konstanten Schleifenstrom von beispielsweise 25 mA und/oder 15mA.

Der Schleifenöffner wird von einem zugeordneten, elektrischen, elektronischen oder mechanischen Stellelement ausgelöst und geöffnet, sobald das betreffende Stellelement eine definierte Störung feststellt. Das Stellelement kann beispielsweise ein Temperatursensor sein, der die Überschreitung einer Grenztemperatur feststellt, und der im Falle einer Grenztemperatur-Überschreitung den betreffenden Schleifenöffner öffnet. Das Stellelement kann auch ein elektronisches Modul, ein Kippsensor, Türöffnungs-Kontakt, Wasserstandsensor etc. sein. Besonders bevorzugt sind im Verlauf der Schleifenleitung mehrere Schleifenöffner vorgesehen, die elektrisch seriell in der Sicherheitsschleife bzw. in der Schleifenleitung angeordnet sind und denen ggf. Stellelemente zugeordnet sind.

Es ist eine separat von der Ladestation ausgebildete Versorgungseinheit vorgesehen, die über eine elektrische Ladestrom-Leitung mit der Ladestation verbunden ist. Die Sicherheitsschleife durchläuft sowohl die Versorgungseinheit als auch die Ladestation. Sowohl die Versorgungseinheit als auch die Ladestation weisen jeweils mindestens einen Schleifenstrom-Sensor und jeweils ein dem Schleifenstrom-Sensor jeweils zugeordnetes Ladestrom-Steuerungsmittel auf.

Der Schleifenstrom-Sensor detektiert kontinuierlich den in der elektrischen Sicherheitsschleife bzw. in der Schleifenleitung fließenden Strom, beispielsweise durch einen Spannungsabgriff an einem in der Schleifenleitung in Serie geschalteten Messwiderstand. Der Schleifenstrom-Sensor ist informell bzw. elektrisch mit dem Ladestrom-Steuerungsmittel verbunden. Sobald der Schleifenstrom-Sensor keinen Schleifenstrom in der Sollflussstärke detektiert, wird der Ladestrom durch das Ladestrom-Steuerungsmittel abgeschaltet, so dass die mit einer Nichtabschaltung verbundenen Gefahren vermieden werden.

Die Schleifenstrom-Quelle ist bevorzugt einer Anlagensteuerung informell bzw. elektrisch zugeordnet, die die Schleifenstrom-Quelle einschaltet, bevor die Anlagensteuerung aufgrund der ihr vorliegenden Informationen das Aufschalten des Ladestroms erlaubt.

Vorzugsweise ist die Sicherheitsschleife bzw. sind die Schleifenleitungen galvanisch getrennt von der übrigen Elektrik und Elektronik der Ladeanordnung, um auf diese Weise Erdschleifen auszuschließen.

Die Ladestation kann entfernt von der Versorgungseinheit angeordnet und platziert sein, so dass die Geräuschemissionen der Versorgungseinheit lokal dorthin verlagert werden können, wo sie weniger stören. Die Ladestation kann beispielsweise bis zu 100 m oder sogar noch weiter entfernt von der Versorgungseinheit aufgestellt sein. An eine Versorgungseinheit können mehrere Ladestationen angeschlossen sein.

Vorzugsweise ist das Ladestrom-Steuerungsmittel der Versorgungseinheit als Leistungselektronik ausgebildet, die den Ladestrom in der erforderlichen Ladespannung generiert. Die Ladestation weist vorzugsweise keine mit einem Wärmetauscher-Kühlaggregat zu kühlende Leistungselektronik auf, so dass die Ladestation sehr kompakt ausgebildet sein kann. Durch den Wegfall einer relativ lauten Kühlung entfallen auch die damit verbundenen Geräuschemissionen an der Ladestation. Die Ladestation unterliegt daher nur geringen gesetzlichen Restriktionen und hat eine hohe Komfortqualität.

Gemäß einer bevorzugten Ausgestaltung weist sowohl die Ladestation als auch die Versorgungseinheit jeweils mindestens einen Schleifenöffner auf. Auf diese Weise können auch bei relativ großer Entfernung zwischen der Ladestation und der Versorgungseinheit Störungen an irgendeinem Ort der Ladeanordnung schnell zu einer Abschaltung der Ladespannung führen.

Gemäß einer bevorzugten Ausgestaltung ist die Schleifenstrom-Quelle derart ausgebildet, dass sie ein positives Wechselsignal generiert. Hierunter wird beispielsweise ein niederfrequentes Wechselsignal verstanden, das seine Polarität nicht ändert, jedoch beispielsweise zwischen zwei Stromflussplateaus alternierend wechselt, beispielsweise mit einer Frequenz im einstelligen Hertzbereich. Beispielsweise kann das Wechselsignal ein Rechtecksignal sein, das zwischen 25 mA und 15 mA mit einer Frequenz von 5 Hz wechselt. Das Wechselsignal wird von dem Schleifenstrom-Sensor ausgewertet. Wenn kein Wechselsignal vorliegt, sondern ein positives Gleichsignal, ist die Schleifenstrom-Quelle möglicherweise defekt, so dass auch dies identifiziert werden und mit geeigneten Maßnahmen hierauf reagiert werden kann.

Vorzugsweise ist die Schleifenstrom-Quelle derart ausgebildet, dass sie das Wechselsignal wahlweise mit mindestens zwei verschiedenen Wechselfrequenzen generieren kann. Auf diese Weise kann die Schleifenstrom-Quelle eine einfache Information an die Schleifenstrom-Sensoren übermitteln. So kann über die Wechselfrequenz beispielsweise die gewählte Ladenorm bzw. Ladespannung übermittelt werden.

Vorzugweise ist die Schleifenstrom-Quelle in der Ladestation angeordnet. In der Ladestation wird die Ladenorm bzw. die Ladespannung gewählt bzw. festgelegt. Sobald dies erfolgt ist, ist die Ladestation grundsätzlich bereit zum Laden, so dass die Schleifenstrom-Quelle eingeschaltet wird und über die Wechselfrequenz in der Sicherheitsschleife die Ladenorm bzw. die Ladespannung an die Versorgungseinheit übermittelt. Hierdurch wird eine zusätzliche Sicherheit bzw. Redundanz bezüglich der Ladenorm bzw. Ladespannung hergestellt.

Im Folgenden wird ein Ausführungsbeispiel anhand der Figuren näher erläutert, die zeigen:
Figur 1 eine schematische Darstellung einer Traktionsbatterie-Ladeanordnung mit einer elektrischen Sicherheitsschleife, und
Figur 2 einen zeitlichen Verlauf eines Schleifenstroms in der Sicherheitsschleife der Ladeanordnung der Figur 1.

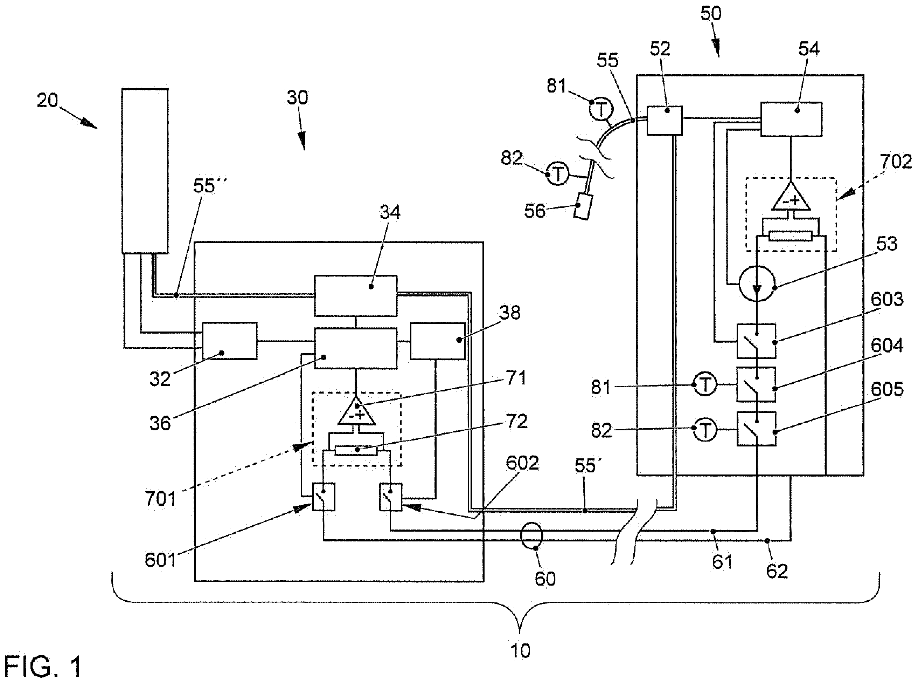

In der Figur 1 ist schematisch eine Traktionsbatterie-Ladeanordnung 10 zum Aufladen einer Traktionsbatterie eines Kraftfahrzeugs dargestellt. Die Ladeanordnung 10 ist im vorliegenden Fall modular aufgebaut, und weist im Wesentlichen eine optionale Umspanneinheit 20, eine Versorgungseinheit 30 und eine Ladestation 50 auf.

Die optionale Umspanneinheit 20 spannt die aus einem Mittelspannungsnetz kommende Spannung von 10-20 kV um in eine Niederspannung von unter 1000 V, die die Arbeitsspannung bzw. die Eingangsspannung der Versorgungseinheit 30 ist und der Versorgungseinheit 30 über eine Versorgungsleitung 55" zur Verfügung gestellt wird.

Die Versorgungseinheit 30 weist ein Ladestrom-Steuerungsmittel 34 mit einer Leistungselektronik auf, durch das die eingespeiste Niederspannung umgewandelt wird in die Ladespannung, mit der die Traktionsbatterie des angeschlossenen Kraftfahrzeugs geladen werden soll. Da die Leistungselektronik bei Ladeleistungen von mehreren 100 kW viel Wärme erzeugt, weist die Versorgungseinheit 30 eine Kühlvorrichtung 38 auf, die einen Wärmetauscher und einen Kompressor aufweist, und die im Wesentlichen der Kühlung der Leistungselektronik des Ladestrom-Steuerungsmittels 34 dient.

Schließlich weist die Versorgungseinheit 30 eine Versorgungseinheits-Steuerung 36 auf, die alle Bestandteile der Versorgungseinheit 30 steuert, synchronisiert und kontrolliert, sowie die Kommunikation der Versorgungseinheit 30 mit den übrigen Komponenten der Ladeanordnung 10 übernimmt. Die Versorgungseinheit 30 weist hierzu ein optionales Schnittstellenmodul 32 auf, über das die Versorgungseinheits-Steuerung 36 mit der Umspanneinheit 20 kommunizieren kann.

Die Ladestation 50 weist eine Ladestations-Steuerung 54, ein Ladekabel 55 mit einem Ladestecker 56 und ein Ladestrom-Steuerungsmittel 52 zum Durchschalten der Ladespannung auf den Ladestecker 56 auf. Die in dem Ladestrom-Steuerungsmittel 34 generierte Ladespannung wird durch eine Ladestrom-Leitung 55' in die Ladestation 50 eingespeist. Die Ladestation 50 ist entfernt von der Versorgungseinheit 30 aufgestellt, beispielsweise mehr als 10 m entfernt von der Versorgungseinheit 30. Die Ladestation 50 weist keine nennenswerte Leistungselektronik auf, und weist daher keine oder nur eine kleine Wärmetauscher-Kühlvorrichtung für das Ladekabel zur Kühleinheit auf, so dass die Geräuschemissionen der Ladestation 50 relativ gering sind.

Im dem vorliegenden Ausführungsbeispiel ist der Versorgungseinheit 30 nur eine einzige Ladestation 50 zugeordnet. Grundsätzlich können einer einzigen Versorgungseinheit 30 jedoch auch mehrere einzelne und entfernt angeordnete Ladestationen 50 zugeordnet sein.

Die Ladeanordnung 10 weist eine elektrische Sicherheitsschleife 60 auf, die eine Vielzahl von Komponenten aufweisen kann, die sowohl in der Versorgungseinheit 30 als auch in der Ladestation 50 vorgesehen sind. Die Sicherheitsschleife 60 besteht aus elektrischer Sicht im Wesentlichen aus zwei Schleifenleitungen 61, 62 zwischen der Versorgungseinheit 30 und der Ladestation 50, einer Schleifenstrom-Quelle 53 in der Ladestation 50, mehreren Schleifenöffnern 601-605 in der Ladestation 50 und der Versorgungseinheit 30 und jeweils einem Schleifenstrom-Sensor 701, 702 in der Ladestation 50 und der Versorgungseinheit 30. Alle vorgenannten Komponenten sind elektrisch in Reihe geschaltet und bilden einen geschlossenen Stromkreis.

Die Versorgungseinheit 30 weist in dem vorliegenden Ausführungsbeispiel zwei Schleifenöffner 601, 602 auf, die von der Kühlvorrichtung 38 und von der Versorgungseinheits-Steuerung 36 aktuiert bzw. angesteuert werden. Sobald die Kühlvorrichtung 38 oder die Versorgungseinheits-Steuerung 36 eine Störung detektiert, wird der zugeordnete Schleifenöffner 601, 602 aktiviert, so dass die Sicherheitsschleife 60 elektrisch geöffnet ist.

Der Schleifenstrom-Sensor 701, 702 wird in diesem Ausführungsbeispiel im Wesentlichen von einem Messwiderstand 72 und einem Operationsverstärker 71 gebildet, und gibt ein an dem Messwiderstand 72 abfallendes proportionales Spannungssignal an die angeschlossene Versorgungseinheit-Steuerung 36 aus.

Die Ladestation 50 weist drei Schleifenöffner 603, 604, 605 auf. Zwei dieser Schleifenöffner 604, 605 werden von jeweils einem Temperatursensor 81,82 aktuiert bzw. geschaltet. Die beiden Temperatursensoren 81, 82 sind in dem Ladekabel 55 angeordnet und überwachen die Temperatur in dem Ladekabel 55. Sobald einer der Temperatursensoren 81, 82 die Überschreitung einer Grenztemperatur feststellt, wird dies dem zugeordneten Schleifenöffner 604, 605 signalisiert, der daraufhin öffnet. Der Schleifenstrom-Sensor 702 der Ladestation 50 ist identisch zu dem Schleifenstrom-Sensor 701 der Versorgungseinheit 30 aufgebaut und übermittelt das an dem betreffenden Messwiderstand abfallende Spannungssignal an die Ladestations-Steuerung 54. Der dritte Schleifenöffner 603 der Ladestation 50 wird von der Ladestation-Steuerung 54 selbst angesteuert.

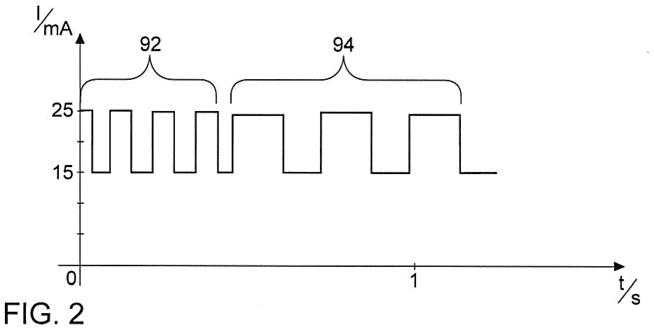

Sobald an der Ladestation 50 die gewünschte Ladenorm bzw. Ladespannung gewählt und bevor die Ladeprozedur gestartet ist, wird die Schleifenstrom-Quelle 53 aktiviert. Die Schleifenstrom-Quelle 53 generiert im vorliegenden Fall ein positives Wechselsignal, das in der Figur 2 exemplarisch dargestellt ist. Das Wechselsignal ist vorliegend ein Rechtecksignal, das zwischen 15 mA und 25 mA mit einer Frequenz im niedrigen einstelligen Hertzbereich alterniert. Je nach gewählter Ladenorm bzw. Ladespannung generiert die Schleifenstrom-Quelle 53 ein Wechselsignal 92 mit einer Frequenz von beispielsweise 8 Hz oder ein Wechselsignal 94 mit einer Frequenz von 5 Hz. Bei drei verschiedenen bedienbaren Ladenormen bzw. Ladespannungen können die hierfür erforderlichen drei Frequenzen beispielsweise 1 Hz, 3 Hz und 8 Hz betragen.

Solange nicht alle Schleifenöffner 601 - 605 geschlossen sind, signalisieren die beiden Schleifenstrom-Sensoren 701, 702 den zugeordneten Ladestrom-Steuerungsmitteln 34,52 ein Nullsignal und damit die Nicht-Bereitschaft, so dass kein Ladestrom fließt. Erst wenn alle Schleifenöffner 601-605 geschlossen sind, werden die beiden Ladestrom-Steuerungsmittel 34, 52 geschlossen, so dass der Ladestrom durch die Ladestromleitung 55' und das Ladekabel 55 zu dem Ladestecker 56 fließen kann.

Über die Frequenz des Wechselsignals 92, 94 in der Sicherheitsschleife 60 wird der Versorgungseinheits-Steuerung 36 eindeutig signalisiert, welche Ladespannung gefordert ist. Falls sich hierbei keine Übereinstimmung ergibt mit den über einen anderen Informationskanal gelieferten Informationen über die Ladenorm bzw. die Ladespannung, kann die Versorgungseinheit-Steuerung 36 sofort den zugeordneten Schleifenöffner 601 öffnen. Für den Fall, dass die Ladestations-Steuerung 54 Inkonsistenzen oder Störungen detektiert, öffnet die Ladestations-Steuerung 54 den zugeordneten Schleifenöffner 603.

Sobald einer der Schleifenstrom-Sensoren 701, 702 kein Wechselsignal 92, 94 oder aber nicht das erwartete Wechselsignal 92, 94 detektiert, werden durch die Steuerungen 36, 54 Maßnahmen ergriffen, um die Ladeanordnung 10 vor einer Beschädigung zu schützen.

## Patentansprüche

1. Traktionsbatterie-Ladeanordnung (10) zum Aufladen einer Traktionsbatterie eines Kraftfahrzeugs, mit
einer Ladestation (50), die einen Ladestecker (56) zur Herstellung einer elektrischen Ladeverbindung mit der Traktionsbatterie des Kraftfahrzeugs aufweist, einer separat von der Ladestation (50) ausgebildeten Versorgungseinheit (30), die über eine elektrische Ladestrom-Leitung (55') mit der Ladestation (50) verbunden ist,
einer elektrischen Sicherheitsschleife (60), die eine Schleifenstrom-Quelle (53), mindestens einen ansteuerbaren Schleifenöffner (601-605) und mindestens einen Schleifenstrom-Sensor (701, 702) aufweist, und
einem Ladestrom-Steuerungsmittel (34,52), das den Ladestrom abschaltet, wenn der Schleifenstrom-Sensor (701, 702) keinen Schleifenstrom detektiert,
**gekennzeichnet dadurch, dass** die Sicherheitsschleife (60) sowohl die Versorgungseinheit (30) als auch die Ladestation (50) durchläuft, und wobei die Versorgungseinheit (30) und die Ladestation (50) jeweils mindestens einen Schleifenstrom-Sensor (701, 702) und ein diesem jeweils zugeordnetes Ladestrom-Steuerungsmittel (34, 52) aufweisen.

2. Traktionsbatterie-Ladeanordnung (10) nach Anspruch 1, wobei das Ladestrom-Steuerungsmittel (34) der Versorgungseinheit (30) als Leistungselektronik ausgebildet ist, die den Ladestrom in der erforderlichen Ladespannung generiert.

3. Traktionsbatterie-Ladeanordnung (10) nach einem der vorangegangenen Ansprüche, wobei sowohl die Ladestation (50) als auch die Versorgungseinheit (30) jeweils mindestens einen Schleifenöffner (601-605) aufweist.

4. Traktionsbatterie-Ladeanordnung (10) nach einem der vorangegangenen Ansprüche, wobei die Schleifenstrom-Quelle (53) derart ausgebildet ist, dass sie ein positives Wechselsignal (92, 94) generiert.

5. Traktionsbatterie-Ladeanordnung (10) nach Anspruch 4, wobei die Schleifenstrom-Quelle (53) das Wechselsignal (92, 94) wahlweise mit mindestens zwei verschiedenen Wechselfrequenzen generieren kann.

6. Traktionsbatterie-Ladeanordnung (10) nach einem der vorangegangenen Ansprüche, wobei die Schleifenstrom-Quelle (53) in der Ladestation (50) angeordnet ist.

7. Traktionsbatterie-Ladeanordnung (10) nach einem der vorangegangenen Ansprüche, wobei der Schleifenöffner (604, 605) einem Temperatursensor (81, 82) derart funktional zugeordnet ist, dass der Schleifenöffner (604, 605) öffnet, sobald der Temperatursensor (81, 82) die Überschreitung einer Grenztemperatur signalisiert.

8. Traktionsbatterie-Ladeanordnung (10) nach einem der vorangegangenen Ansprüche, wobei die Sicherheitsschleife (60) mehrere Schleifenöffner (601-605) aufweist, die elektrisch seriell in der Sicherheitsschleife (60) angeordnet sind.

## Claims

1. Traction battery charging arrangement (10) for charging a traction battery of a motor vehicle, having
a charging station (50), which has a charging plug (56) for producing an electrical charging connection to the traction battery of the motor vehicle,
a supply unit (30), which is formed separately from the charging station (50) and which is connected to the charging station (50) by means of an electrical charging-current line (55'),
an electrical safety loop (60), which has a loop-current source (53), at least one actuable loop break contact (601-605) and at least one loop-current sensor (701, 702), and
a charging-current control means (34, 52), which switches off the charging current when the loop-current sensor (701, 702) does not detect a loop current,
**characterized in that**
the safety loop (60) runs through both the supply unit (30) and the charging station (50), and wherein the supply unit (30) and the charging station (50) each have at least one loop-current sensor (701, 702) and a respective charging-current control means (34, 52) associated therewith.

2. Traction battery charging arrangement (10) according to claim 1, wherein the charging-current control means (34) of the supply unit (30) is designed as a power electronics system, which generates the charging current in the necessary charging voltage.

3. Traction battery charging arrangement (10) according to either of the preceding claims, wherein both the charging station (50) and the supply unit (30) each have at least one loop break contact (601-605).

4. Traction battery charging arrangement (10) according to one of the preceding claims, wherein the loop-current source (53) is designed in such a way that it generates a positive alternating signal (92, 94).

5. Traction battery charging arrangement (10) according to Claim 4, wherein the loop-current source (53) can generate the alternating signal (92, 94) selectively at at least two different alternating frequencies.

6. Traction battery charging arrangement (10) according to one of the preceding claims, wherein the loop-current source (53) is arranged in the charging station (50).

7. Traction battery charging arrangement (10) according to one of the preceding claims, wherein the loop break contact (604, 605) is functionally associated with a temperature sensor (81, 82) in such a way that the loop break contact (604, 605) opens as soon as the temperature sensor (81, 82) signals the exceedance of a limit temperature.

8. Traction battery charging arrangement (10) according to one of the preceding claims, wherein the safety loop (60) has a plurality of loop break contacts (601-605), which are arranged electrically in series in the safety loop (60).

## Revendications

1. Dispositif de charge de batterie de traction (10) permettant de recharger une batterie de traction d'un véhicule automobile, comprenant
une station de charge (50) qui présente une prise de charge (56) pour établir une liaison de charge électrique avec la batterie de traction du véhicule automobile,
une unité d'alimentation (30) réalisée séparément de la station de charge (50) et qui est reliée à la station de charge (50) par un câble de courant de charge électrique (55'),
une boucle de sécurité électrique (60) qui présente une source de courant de boucle (53), au moins un contact d'ouverture de boucle (601 à 605) pouvant être commandé et au moins un capteur de courant de boucle (701, 702), et
un moyen de commande de courant de charge (34, 52) qui coupe le courant de charge si le capteur de courant de charge (701, 702) ne détecte aucun courant de boucle,
**caractérisé en ce que** la boucle de sécurité (60) passe à la fois à travers l'unité d'alimentation (30) et la station de charge (50), et l'unité d'alimentation (30) et la station de charge (50) présentant respectivement au moins un capteur de courant de boucle (701, 702) et un moyen de commande de courant de charge (34, 52) respectivement associé à celui-ci.

2. Dispositif de charge de batterie de traction (10) selon la revendication 1, dans lequel le moyen de commande de courant de charge (34) de l'unité d'alimentation (30) est réalisé sous la forme d'une électronique de puissance qui produit le courant de charge avec la tension de charge nécessaire.

3. Dispositif de charge de batterie de traction (10) selon l'une quelconque des revendications précédentes, dans lequel à la fois la station de charge (50) et l'unité d'alimentation (30) présentent respectivement au moins un contact d'ouverture de boucle (601 à 605).

4. Dispositif de charge de batterie de traction (10) selon l'une quelconque des revendications précédentes, dans lequel la source de courant de boucle (53) est réalisée de telle sorte qu'elle produit un signal alternatif positif (92, 94).

5. Dispositif de charge de batterie de traction (10) selon la revendication 4, dans lequel la source de courant de boucle (53) peut produire le signal alternatif (92, 94) au choix avec au moins deux fréquences alternatives différentes.

6. Dispositif de charge de batterie de traction (10) selon l'une quelconque des revendications précédentes, dans lequel la source de courant de boucle (53) est disposée dans la station de charge (50).

7. Dispositif de charge de batterie de traction (10) selon l'une quelconque des revendications précédentes, dans lequel le contact d'ouverture de boucle (604, 605) est associé de manière fonctionnelle à un capteur de température (81, 82) de telle sorte que le contact d'ouverture de boucle (604, 605) s'ouvre dès que le capteur de température (81, 82) signale le dépassement d'une température limite.

8. Dispositif de charge de batterie de traction (10) selon l'une quelconque des revendications précédentes, dans lequel la boucle de sécurité (60) présente plusieurs dispositifs d'ouverture de boucle (601 à 605) qui sont disposés électriquement en série dans la boucle de sécurité (60).
